# EUROPEAN PATENT SPECIFICATION

(11) **EP 2 658 229 B1**
(45) Date of publication and mention of the grant of the patent: **18.05.2016**
(21) Application number: 13152466.2
(22) Date of filing: 24.01.2013
(51) Int. Cl.: H04M 1/725, G06F 13/00, G11B 19/04

(54) **Method and apparatus for automatically backing up data**
Verfahren und Vorrichtung zur automatischen Datensicherung
Procédé et appareil pour la sauvegarde automatique de données

(30) Priority: 23.04.2012 CN 201210121332
(43) Date of publication of application: 30.10.2013
(73) Proprietor: Huawei Device Co., Ltd., Longgang District Shenzhen Guangdong 518129 (CN)
(72) Inventor: HAN, Fei, Shenzhen, Guangdong 518129 (CN)
(74) Representative: Thun, Clemens

(56) References cited:
- EP-A2- 1 158 511
- GB-A- 2 475 107
- JP-A- 2005 346 566
- US-A1- 2007 120 528
- US-A1- 2008 218 366

## Description

### FIELD OF THE INVENTION

The present invention relates to the field of communications technologies, and in particular, to a method and an apparatus for automatically backing up data.

### BACKGROUND OF THE INVENTION

With the popularity of smart mobile phones, mobile phones play an increasingly important role in daily life. Mobile phones are not only communication tools but also storage and entertainment integration devices. In addition to communication functions such as daily voice calls and Internet browsing, a user can also store some important data in a mobile phone for the convenience of usage. For example, a user can store, in a mobile phone, information such as an E-mail and an address of a contact and configuration information of the current mobile phone. In order to ensure the information security of important data, currently many manufactures of manufacturing smart mobile phones provide a cloud-service solution, in which after it is monitored that a user triggers a data backup function, data in a mobile phone of the user can be associated and synchronized with data of a backup service server end, so that important data in the mobile phone of the user is backed up.

However, the prior art has at least the following problem: At the time of backing up important data, a data backup service can be finished only if a user triggers a data backup function actively. If the user does not back up data in time and actively, when a mobile phone is damaged due to falling down of the mobile phone, as a result, the data of the user may be lost.

In EP 1158 511 A2 a portable electronic device therefore backs up data stored in memories of the portable electronic device in response to detecting a damaging event such as a free fall.

In US 2007/120528 A1 a portable electronic device and a method to protect the portable electronic device from a battery bounce are therefore provided.

### SUMMARY OF THE INVENTION

Embodiments of the present invention provide a method and an apparatus for automatically backing up data, so that when a user terminal is falling down, data can be automatically backed up, thereby ensuring the security of data of a user.

To achieve the foregoing objective, the embodiments of the present invention adopt the following technical solutions.

In one aspect, an embodiment of the present invention provides a method for automatically backing up data, where the method includes:
detecting whether a terminal is falling down; and
if it is detected that the terminal is falling down, triggering a data backup operation and backing up data that needs to be backed up in the terminal;
wherein when a position and a posture of the terminal change due to an outside force exerted on the terminal, before the detecting whether the terminal is falling down, the method further comprises:
monitoring a current posture of the terminal by using a gyroscope; and
monitoring, in real time through the acceleration sensor, the acting force exerted on the terminal, and in conjunction with the current posture of the terminal, determining an acting force exerted on the terminal in a horizontal direction and an acting force exerted on the terminal in a gravitational direction;
wherein the detecting whether a terminal is falling down comprises:
when the acting force exerted on the terminal in the gravitational direction reaches a preset threshold, determining that the terminal is in a falling state; and
wherein the triggering a data backup operation comprises:
when the acting force exerted on the terminal in the horizontal direction is not 0, triggering a data backup operation and sending authentication information to a backup channel server, so that the backup channel server performs authentication on the terminal and establishes a data transmission channel for the terminal after the authentication succeeds; and
the backing up data that needs to be backed up in the terminal comprises:
   when it is determined that the terminal is in a falling state, uploading, through the data transmission channel established in advance, the data that needs to be backed up to a backup service server, so as to finish data backup.

In another aspect, an embodiment of the present invention further provides an apparatus for automatically backing up data, where the apparatus includes:
a detecting unit, configured to detect whether a terminal is falling down;
a backup unit, configured to: when the detecting unit detects that the terminal is falling down, trigger a data backup operation and back up data that needs to be backed up in the terminal; and
a gyroscope, configured to monitor a current posture of the terminal;
wherein the detecting unit comprises:
a monitoring module, configured to monitor, in real time through an acceleration sensor, an acting force exerted on the terminal, and in conjunction with the current posture of the terminal, determine, according to the acceleration sensor, an acting force exerted on the terminal in a horizontal direction and an acting force exerted on the terminal in a gravitational direction; and
a determining module, configured to: when the acting force exerted on the terminal in the gravitational direction reaches a preset threshold, determine that the terminal is in a falling state; and
wherein the backup unit comprises:
an early-warning module, configured to: when the acting force exerted on the terminal in the horizontal direction is not 0, trigger a data backup operation and send authentication information to a backup channel server, so that the backup channel server performs authentication on the terminal and establishes a data transmission channel for the terminal after the authentication is succeeds; and
the backup unit is configured to: when it is determined that the terminal is in a falling state, upload, through the data transmission channel established in advance, the data that needs to be backed up to a backup service server, so as to finish data backup.

With the method and the apparatus for automatically backing up data provided in the embodiments of the present invention, when a terminal is falling down, data of a user can be actively backed up, thereby ensuring the security of the data of the user.

### BRIEF DESCRIPTION OF THE DRAWINGS

To describe the technical solutions in the embodiments of the present invention or in the prior art more clearly, the accompanying drawings required for describing the embodiments or the prior art are briefly introduced in the following. Apparently, the accompanying drawings in the following description show merely some embodiments of the present invention, and persons of ordinary skill in the art may still derive other drawings from these accompanying drawings without creative efforts.
FIG. 1 is a schematic flow chart of a method for automatically backing up data according to Embodiment 1 of the present invention;
FIG. 2 is a schematic flow chart of a method for automatically backing up data according to Embodiment 2 of the present invention;
FIG. 3 is a schematic diagram of a coordinate system used by an acceleration sensor in a terminal according to Embodiment 2 of the present invention;
FIG. 4 is a schematic flow chart of a method for automatically backing up data according to Embodiment 3 of the present invention; and
FIG. 5 to FIG. 8 are schematic structural diagrams of an apparatus for automatically backing up data according to Embodiment 4 of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

### Embodiment 1

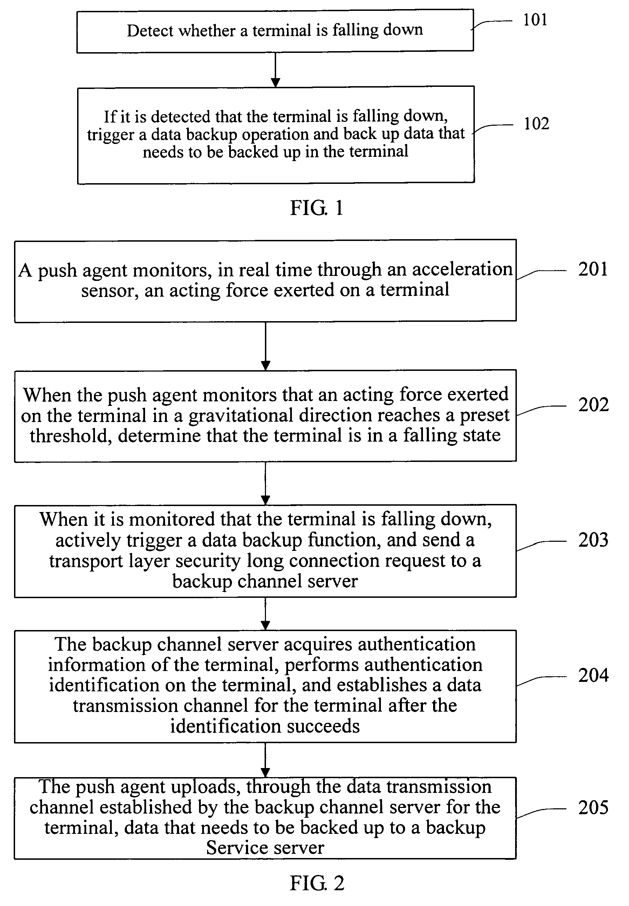

An exemplary embodiment provides a method for automatically backing up data, and as shown in FIG. 1, the method includes:
101: Detect whether a terminal is falling down.

The terminal in this embodiment is a terminal device that has an acceleration sensor, which includes but is not limited to a mobile phone and a tablet computer that have an acceleration sensor. The acceleration sensor can sense an acting force exerted on the terminal device. When a terminal is in a free falling state, an outside acting force exerted on the terminal in a gravitational direction is 0, so that whether the terminal is falling down can be determined through an acceleration sensor.

It should be noted that, because of the wide popularity of the Android (Android) system and a feature of open source design of the system, the terminal in this embodiment is preferably a terminal device that adopts the Android system, which is not limited herein.

102: If it is detected that the terminal is falling down, trigger a data backup operation and back up data that needs to be backed up in the terminal.

With the method for automatically backing up data provided in this embodiment of the present invention, when a terminal is falling down, a data backup service can be actively triggered to back up data of a user, thereby ensuring the security of the data of the user.

### Embodiment 2

An exemplary embodiment provides a method for automatically backing up data, and as shown in FIG. 2, the method includes:
201: A Push Agent (push agent) monitors, in real time through an acceleration sensor, an acting force exerted on a terminal.

The Push Agent is a background running program applied to the terminal, and can actively trigger a data backup function when a preset triggering condition is met, so as to send data that needs to be backed up to a backup service server for backup. The terminal in this embodiment is a terminal device that has an acceleration sensor, which includes but is not limited to a mobile phone and a tablet computer that have an acceleration sensor. The acceleration sensor can sense an acting force exerted on the terminal device.

It should be noted that, because of the popularity of the Android system and a feature of open source design of the system, the terminal in this embodiment is preferably a terminal device that adopts the Android system, which is not limited herein. The Android system provides an API (Application Programming Interface, application programming interface) of an acceleration sensor for an application program in the terminal to invoke. Specifically, values (array) in a SensorEvent (acceleration sensor event) object provided by the API of the acceleration sensor may be used as a determination value of an acceleration in a vertical direction.

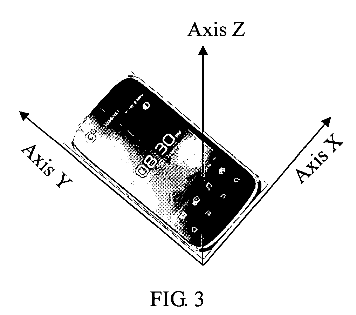

Specifically, as shown in FIG. 3, an acceleration sensor in an Android mobile phone can monitor, in real time, acting forces exerted on the mobile phone in directions of axis X, axis Y, and axis Z. In FIG. 3, a scenario where a mobile phone is horizontally placed on a horizontal plane with the screen upward is taken as an example for description. Axis X and axis Y are in horizontal directions of two adjacent side edges of the mobile phone. Numerical values of axis X and axis Y are used for representing acting forces that are exerted on the mobile phone in the horizontal directions (namely, directions pointed by axis X and axis Y). Axis Z is in a direction that is perpendicular to the mobile phone screen, and a numerical value (hereinafter referred to as a value Z) of axis Z is used for representing an acting force that is exerted on the mobile phone in a gravitational direction. The values are an array formed by numerical values of axes (namely, axis X, axis Y, and axis Z) in a three-dimensional space.

202: When the Push Agent monitors that an acting force exerted on the terminal in a gravitational direction reaches a preset threshold, determine that the terminal is in a falling state.

It should be noted that, this embodiment of the present invention is applied to a scenario where a terminal is falling down freely (such as a scenario where a mobile phone slips off from the hand when a user is in a call), that is, a falling trajectory of the terminal is vertically downward along the gravitational direction, and a posture of the mobile phone remains unchanged in a falling process. In this embodiment of the present invention, the Push Agent is specifically configured to monitor a value Z measured by the acceleration sensor. When it is monitored that the value Z reaches a preset threshold, it is determined that the terminal is in a falling state.

In this embodiment, the preset threshold is preset according to an instruction of a user and is used to indicate sensitivity of triggering a data backup service. The larger the threshold is, the lower the sensitivity of triggering a data backup service is; and the smaller the threshold is, the higher the sensitivity of triggering a data backup service is.

It should be noted that, the foregoing preset threshold is theoretically most accurate when it is set to 0. However, for the consideration of factors, such as aging of a terminal and an error of a measurement value of an acceleration sensor, in order to fully ensure the security of data of a user, the user may set the preset threshold according to a demand of the user, so that when a force exerted on the terminal in the gravitational direction is close to 0, it is determined that the terminal is falling down.

203: When it is monitored that the terminal is falling down, actively trigger a data backup function, and send a TLS (Transport Layer Security, transport layer security) long connection request to a backup channel server, where the request is used to instruct the backup channel server to establish a data transmission channel for the current terminal. The TLS long connection request may carry authentication information of the terminal, where the authentication information is used by the data transmission channel to perform authentication on the terminal and a data transmission channel is established for the terminal after the authentication succeeds.

The backup channel server in this embodiment is configured to establish the data transmission channel for the terminal, so that the terminal uploads data to the backup service server for backup. The backup channel server includes at least a Push Server (push server), an Auth Server (Authenticate Server, authentication server), and a CRS (Clouder Router Server, cloud router server). The Push Server is configured to perform data transmission with the Push Agent; the Auth Server is configured to perform authentication on the terminal, so as to determine whether the terminal has data backup permission; and the CRS provide an HTTP (Hyper Text Transport Protocol, hyper text transport protocol) interface for the backup service server, where the HTTP interface is used to perform data transmission with the backup service server, where an internal long connection may be established between the Push Server and the CRS through a TCP (Transmission Control Protocol, transmission control protocol).

204: The backup channel server acquires the authentication information of the terminal, performs authentication on the terminal, and establishes a data transmission channel for the terminal after the authentication succeeds.

205: The Push Agent uploads, through the data transmission channel established by the backup channel server for the terminal, data that needs to be backed up to a backup Service server, so as to finish a data backup service. The backup service server is configured to store backup data that is sent by the terminal, so as to implement association and synchronization of the backup data with the terminal.

It should be noted that, in this embodiment, the data that needs to be backed up may be data that needs to be backed up by default in the terminal, and may also be data that is defined, according to an instruction of a user, as data that needs to be backed up, which is not limited herein.

With the method for automatically backing up data provided in this embodiment , when a terminal is falling down freely, a data backup function can be automatically triggered to back up data of a user, thereby ensuring the security of the data of the user.

In the following, an extended application of the technical solution in the present invention is provided.

When an after-sales department of a terminal manufacturer repairs a damaged terminal device, the terminal usually needs to be detected, so as to determine whether the terminal is damaged artificially. Currently, a process of detecting whether the terminal is damaged artificially is relatively travail.

According to the method provided in this embodiment-, if a Push Agent monitors that a terminal is falling down, falling information of the terminal can be sent to an after-sales server of the terminal, so as to indicate that a falling behavior happens to the terminal at a certain time. When repairing a damaged terminal device, an after-sales department can query an after-sales server to determine whether a falling behavior happens to the terminal, thereby conveniently determining whether the terminal is damaged artificially.

### Embodiment 3

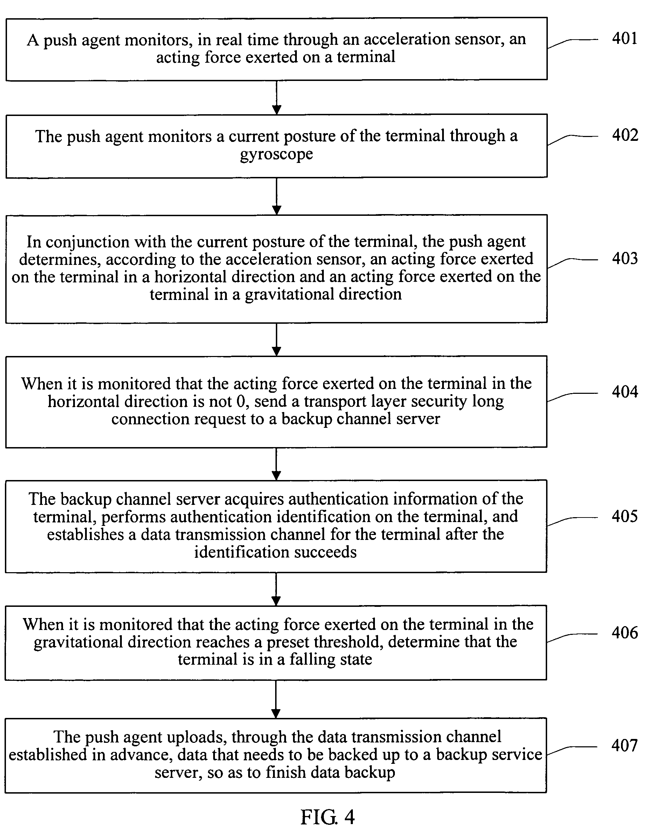

An exemplary embodiment provides a method for automatically backing up data, and as shown in FIG. 4, the method includes:
401: A Push Agent monitors, in real time through an acceleration sensor, an acting force exerted on a terminal.

The Push Agent is a background running program applied to the terminal, and can actively trigger a data backup function when a preset triggering condition is met, so as to send data that needs to be backed up to a backup service server for backup. The terminal in this embodiment is a terminal device that has an acceleration sensor, which includes but is not limited to a mobile phone and a tablet computer that have an acceleration sensor. The acceleration sensor can sense an acting force exerted on the terminal device.

It should be noted that, because of the popularity of the Android system and a feature of open source design of the system, the terminal in this embodiment is preferably a terminal device that adopts the Android system, which is not limited herein. The Android system provides an API of an acceleration sensor for an application program in the terminal to invoke. Specifically, values in a SensorEvent object provided by the API of the acceleration sensor may be used as a determination value of an acceleration in a vertical direction.

402: The Push Agent monitors a current posture of the terminal through a gyroscope.

The gyroscope can detect the current posture of the terminal in a space, that is, can determine whether the terminal is horizontally placed or slantwise placed.

403: In conjunction with the current posture of the terminal, the Push Agent determines, according to the acceleration sensor, an acting force exerted on the terminal in a horizontal direction and an acting force exerted on the terminal in a gravitational direction.

It should be noted that, the acting force that is exerted on the terminal and sensed by the acceleration sensor is merely relative to the terminal. To facilitate understanding, as shown in FIG 3, the acceleration sensor can determine magnitudes and directions of acting forces exerted on the terminal on axis X, axis Y, and axis Z. It should be emphasized that, in FIG. 3, a coordinate system formed by axis X, axis Y, and axis Z is fixed relative to the terminal, directions of axis X, axis Y, and axis Z change with a change of a posture of the terminal.

In this embodiment, the Push Agent monitors, through the acceleration sensor, the acting force exerted on the terminal; meanwhile, in conjunction with the current posture of the terminal, where the current posture of the terminal is monitored through the gyroscope, the Push Agent can determine the acting forces exerted on the terminal in the horizontal direction and in the gravitational direction.

404: When it is monitored that the acting force exerted on the terminal in the horizontal direction is not 0, send a TLS long connection request to a backup channel server, where the request is used to instruct the backup channel server to establish a data transmission channel for the current terminal. The TLS long connection request may carry authentication information of the terminal, where the authentication information is used by the data transmission channel to perform authentication on the terminal and a data transmission channel is established for the terminal after the authentication succeeds.

The backup channel server in this embodiment is configured to establish a data transmission channel for the terminal, so that the terminal uploads data to the backup service server for backup. The backup channel server includes at least a Push Server, an Auth Server, and a CRS. Reference is made to Embodiment 2 for specific functions of the Push Server, the Auth Server, and the CRS, which are not repeated herein.

405: The backup channel server acquires the authentication information of the terminal, performs authentication on the terminal, and establishes a data transmission channel for the terminal after the authentication succeeds.

406: When it is monitored that the acting force exerted on the terminal in the gravitational direction reaches a preset threshold, determine that the terminal is in a falling state.

In this embodiment of the present invention, the preset threshold is preset according to an instruction of a user and is used to indicate sensitivity of triggering a data backup service. The larger the threshold is, the lower the sensitivity of triggering a data backup service is; and the smaller the threshold is, the higher the sensitivity of triggering a data backup service is.

It should be noted that, the foregoing preset threshold is theoretically most accurate when it is set to 0. However, for the consideration of factors, such as aging of a terminal and an error of a measurement value of an acceleration sensor, in order to fully ensure the security of data of a user, the user may set the preset threshold according to a demand of the user, so that when a force exerted on the terminal in the gravitational direction is close to 0, it is determined that the terminal is falling down.

407: The Push Agent uploads, through the data transmission channel established in advance, data that needs to be backed up to the backup service server, so as to finish data backup. The backup service server is configured to store backup data that is sent by the terminal, so as to implement association and synchronization of the backup data with the terminal.

In this embodiment-, the data that needs to be backed up may be data that needs to be backed up by default in the terminal, and may also be data that is defined, according to an instruction of a user, as data that needs to be backed up, which is not limited herein.

It should be noted that, this embodiment is applied to a scenario where a terminal is falling down due to an outside force, such as, a scenario where a terminal placed on a desktop flies out after an outside force is exerted on the terminal. Specifically, when the terminal placed on the desktop slips off due to the outside force, according to steps 404 and 405, in a sliding process of the terminal, a data transmission channel can be established for the terminal; and when the terminal is falling down, a data backup operation can be rapidly finished through the data transmission channel established in advance.

With the method for automatically backing up data provided in this embodiment of the present invention, when an outside force is exerted on a terminal, whether the terminal is falling down can be determined in advance, and a data transmission channel is established in advance; and when it is determined that the terminal is falling down, a data backup service is finished through the data transmission channel established in advance, thereby ensuring the security of data of a user.

### Embodiment 4

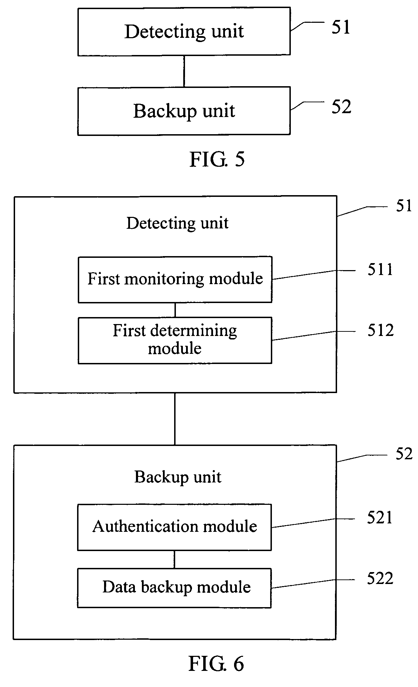

An exemplary embodiment provides an apparatus for automatically backing up data, which can implement the foregoing method embodiments. As shown in FIG. 5, the apparatus includes:
a detecting unit 51, configured to detect whether a terminal is falling down; and
a backup unit 52, configured to: when the detecting unit detects that the terminal is falling down, trigger a data backup operation and back up data that needs to be backed up in the terminal.

Further, as shown in FIG. 6, the detecting unit 51 includes a first monitoring module 511 and a first determining module 512, and the backup unit 52 includes an authentication module 521 and a data backup module 522.

The first monitoring module 511 is configured to monitor, in real time through an acceleration sensor, an acting force exerted on the terminal.

The first determining module 512 is configured to: when it is monitored that an acting force exerted on the terminal in a gravitational direction reaches a preset threshold, determine that the terminal is in a falling state.

The authentication module 521 is configured to send authentication information to a backup channel server, so that the backup channel server performs authentication on the terminal and establishes a data transmission channel for the terminal after the authentication succeeds.

The data backup module 522 is configured to upload, through the data transmission channel, data that needs to be backed up to a backup service server, so as to finish a data backup service. The backup service server is configured to store backup data that is sent by the terminal, so as to implement association and synchronization of the backup data with the terminal.

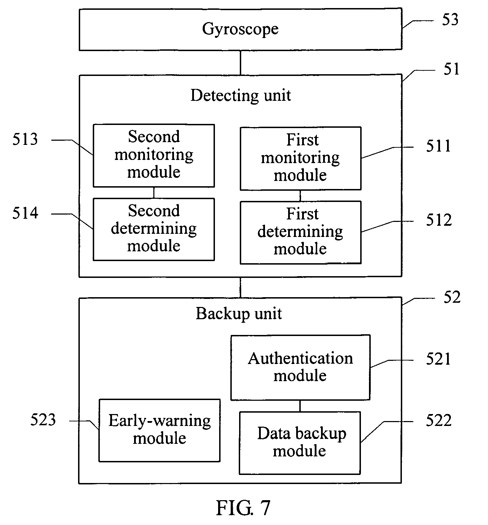

Further, as shown in FIG. 7, the apparatus further includes a gyroscope 53. The detecting unit 51 includes a second detecting module 513 and a second determining module 514, and the backup unit includes an early-warning module 523.

The gyroscope 53 is configured to monitor a current posture of the terminal.

The second detecting module 513 is configured to monitor, in real time through the acceleration sensor, the acting force exerted on the terminal, and in conjunction with the current posture of the terminal, determine, according to the acceleration sensor, an acting force exerted on the terminal in a horizontal direction and an acting force exerted on the terminal in the gravitational direction.

The second determining module 514 is configured to: when the acting force exerted on the terminal in the gravitational direction reaches a preset threshold, determine that the terminal is in a falling state.

The early-warning module 523 is configured to: when the acting force exerted on the terminal in the horizontal direction is not 0, trigger a data backup operation and send authentication information to a backup channel server, so that the backup channel server performs authentication on the terminal and establishes a data transmission channel for the terminal after the authentication succeeds.

The backup unit 52 is specifically configured to: when it is determined that the terminal is in a falling state, upload, through the data transmission channel established in advance, data that needs to be backed up to a backup service server, so as to finish data backup.

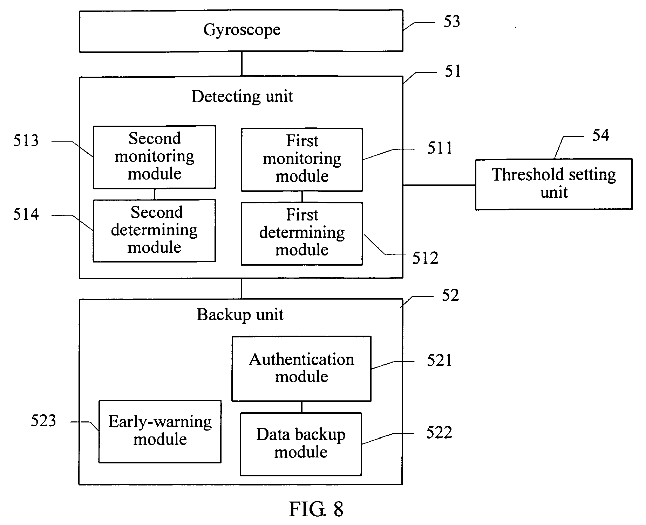

Further, as shown in FIG. 8, the apparatus further includes:
a threshold setting unit 54, configured to preset a preset threshold, where the preset threshold is used to indicate sensitivity of triggering a data backup service. The larger the threshold is, the lower the sensitivity of triggering a data backup service is; and the smaller the threshold is, the higher the sensitivity of triggering a data backup service is.

With the apparatus for automatically backing up data provided in this embodiment, when a terminal is falling down, a data backup function can be actively triggered to back up data of a user, thereby ensuring the security of the data of the user.

Through the foregoing description of the embodiments, persons skilled in the art may clearly understand that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in the form of a software product. The computer software product is stored in a readable storage medium, for example, a floppy disk, a hard disk, or an optical disk of a computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the claims.

## Claims

1. A method for automatically backing up data, comprising:
detecting whether a terminal is falling down (101); and
if it is detected that the terminal is falling down, triggering a data backup operation and backing up data that needs to be backed up in the terminal (102);
wherein when a position and a posture of the terminal change due to an outside force exerted on the terminal, before the detecting whether the terminal is falling down, the method further comprises:
monitoring a current posture of the terminal by using a gyroscope (402); and
monitoring, in real time through the acceleration sensor, the acting force exerted on the terminal (401), and in conjunction with the current posture of the terminal, determining an acting force exerted on the terminal in a horizontal direction and an acting force exerted on the terminal in a gravitational direction (403);
wherein the detecting whether a terminal is falling down comprises:
when the acting force exerted on the terminal in the gravitational direction reaches a preset threshold, determining that the terminal is in a falling state (406); and
wherein the triggering a data backup operation comprises:
when the acting force exerted on the terminal in the horizontal direction is not 0, triggering a data backup operation and sending authentication information to a backup channel server, so that the backup channel server performs authentication on the terminal and establishes a data transmission channel for the terminal after the authentication succeeds (404, 405); and
the backing up data that needs to be backed up in the terminal comprises:
when it is determined that the terminal is in a falling state, uploading, through the data transmission channel established in advance, the data that needs to be backed up to a backup service server, so as to finish data backup (407).

2. The method according to claim 1, further comprising: presetting a preset threshold, wherein the preset threshold is used to indicate sensitivity of triggering a data backup service; and the larger the threshold is, the lower the sensitivity of triggering a data backup service is, and the smaller the threshold is, the higher the sensitivity of triggering a data backup service is.

3. An apparatus for automatically backing up data, comprising:
a detecting unit (51), configured to detect whether a terminal is falling down;
a backup unit (52), configured to: when the detecting unit detects that the terminal is falling down, trigger a data backup operation and back up data that needs to be backed up in the terminal; and
a gyroscope (53), configured to monitor a current posture of the terminal;
wherein the detecting unit (51) comprises:
a monitoring module (513), configured to monitor, in real time through an acceleration sensor, an acting force exerted on the terminal, and in conjunction with the current posture of the terminal, determine, according to the acceleration sensor, an acting force exerted on the terminal in a horizontal direction and an acting force exerted on the terminal in a gravitational direction; and
a determining module (514), configured to: when the acting force exerted on the terminal in the gravitational direction reaches a preset threshold, determine that the terminal is in a falling state; and
wherein the backup unit (52) comprises:
an early-warning module (523), configured to: when the acting force exerted on the terminal in the horizontal direction is not 0, trigger a data backup operation and send authentication information to a backup channel server, so that the backup channel server performs authentication on the terminal and establishes a data transmission channel for the terminal after the authentication is succeeds; and
the backup unit (52) is configured to: when it is determined that the terminal is in a falling state, upload, through the data transmission channel established in advance, the data that needs to be backed up to a backup service server, so as to finish data backup.

4. The apparatus according to claim 3, further comprising:
a threshold setting unit (54), configured to preset a preset threshold, wherein the preset threshold is used to indicate sensitivity of triggering a data backup service; and the larger the threshold is, the lower the sensitivity of triggering a data backup service is, and the smaller the threshold is, the higher the sensitivity of triggering a data backup service is.

## Patentansprüche

1. Verfahren zur automatischen Datensicherung, das Folgendes umfasst:
Detektieren, ob ein Endgerät herunterfällt (101); und
wenn detektiert wird, dass das Endgerät herunterfällt, Auslösen einer Datensicherungsoperation und Sichern von Daten, die in dem Endgerät gesichert werden müssen (102);
wobei, wenn eine Position und eine Lage des Endgerätes sich aufgrund einer von außen auf das Endgerät auswirkenden Kraft ändern, das Verfahren vor dem Detektieren, ob das Endgerät herunterfällt, des Weiteren Folgendes umfasst:
Überwachen einer momentanen Lage des Endgerätes unter Verwendung eines Gyroskops (402); und
Überwachen, in Echtzeit durch den Beschleunigungssensor, der auf das Endgerät ausgeübten Wirkkraft (401), und in Verbindung mit der momentanen Lage des Endgerätes, Bestimmen einer Wirkkraft, die auf das Endgerät in einer horizontalen Richtung wirkt, und einer Wirkkraft, die auf das Endgerät in einer Schwerkraftrichtung wirkt (403);
wobei das Detektieren, ob ein Endgerät herunterfällt, Folgendes umfasst:
wenn die Wirkkraft, die auf das Endgerät in der Schwerkraftrichtung wirkt, eine voreingestellte Schwelle erreicht, Bestimmen, dass das Endgerät in einem Fallzustand ist (406); und
wobei das Auslösen einer Datensicherungsoperation Folgendes umfasst:
wenn die Wirkkraft, die auf das Endgerät in der horizontalen Richtung wirkt, nicht 0 ist, Auslösen einer Datensicherungsoperation und Senden von Authentifizierungsinformationen an einen Sicherungskanalserver, so dass der Sicherungskanalserver eine Authentifizierung an dem Endgerät ausführt und einen Datenübertragungskanal für das Endgerät aufbaut, nachdem die Authentifizierung erfolgreich war (404, 405); und
das Sichern von Daten, die in dem Endgerät gesichert werden müssen, Folgendes umfasst:
wenn bestimmt wird, dass das Endgerät in einem Fallzustand ist, Hinaufladen, über den im Voraus aufgebauten Datenübertragungskanal, der Daten, die gesichert werden müssen, zu einem Sicherungsdienstserver, um die Datensicherung zu beenden (407).

2. Verfahren nach Anspruch 1, das des Weiteren Folgendes umfasst: Voreinstellen einer voreingestellten Schwelle, wobei die voreingestellte Schwelle verwendet wird, um die Empfindlichkeit des Auslösens eines Datensicherungsdienstes anzugeben; und je größer die Schwelle ist, desto niedriger ist die Empfindlichkeit des Auslösens eines Datensicherungsdienstes, und je kleiner die Schwelle ist, desto höher ist die Empfindlichkeit des Auslösens eines Datensicherungsdienstes.

3. Vorrichtung zur automatischen Datensicherung, die Folgendes umfasst:
eine Detektionseinheit (51), die dafür konfiguriert ist zu detektieren, ob ein Endgerät herunterfällt;
eine Sicherungseinheit (52), die dafür konfiguriert ist, wenn die Detektionseinheit detektiert, dass das Endgerät herunterfällt, eine Datensicherungsoperation auszulösen und Daten zu sichern, die in dem Endgerät gesichert werden müssen; und
ein Gyroskop (53), das dafür konfiguriert ist, eine momentane Lage des Endgerätes zu überwachen;
wobei die Detektionseinheit (51) Folgendes umfasst:
ein Überwachungsmodul (513), das dafür konfiguriert ist, in Echtzeit über einen Beschleunigungssensor, eine Wirkkraft zu überwachen, die auf das Endgerät ausgeübt wird, und in Verbindung mit der momentanen Lage des Endgerätes, gemäß dem Beschleunigungssensor, eine Wirkkraft, die auf das Endgerät in einer horizontalen Richtung wirkt, und eine Wirkkraft, die auf das Endgerät in einer Schwerkraftrichtung wirkt, zu bestimmen; und
ein Bestimmungsmodul (514), das dafür konfiguriert ist, wenn die Wirkkraft, die auf das Endgerät in der Schwerkraftrichtung wirkt, eine voreingestellte Schwelle erreicht, zu bestimmen, dass das Endgerät in einem Fallzustand ist; und
wobei die Sicherungseinheit (52) Folgendes umfasst:
ein Frühwarnmodul (523), das dafür konfiguriert ist, wenn die Wirkkraft, die auf das Endgerät in der horizontalen Richtung wirkt, nicht 0 ist, eine Datensicherungsoperation auszulösen und Authentifizierungsinformationen an einen Sicherungskanalserver zu senden, so dass der Sicherungskanalserver eine Authentifizierung an dem Endgerät ausführt und einen Datenübertragungskanal für das Endgerät aufbaut, nachdem die Authentifizierung erfolgreich war; und
die Sicherungseinheit (52) dafür konfiguriert ist, wenn bestimmt wird, dass das Endgerät in einem Fallzustand ist, über den im Voraus aufgebauten Datenübertragungskanal die Daten, die gesichert werden müssen, in einen Sicherungsdienstserver hinaufzuladen, um die Datensicherung zu beenden.

4. Vorrichtung nach Anspruch 3, die des Weiteren Folgendes umfasst:
eine Schwelleneinstelleinheit (54), die dafür konfiguriert ist, eine voreingestellte Schwelle voreinzustellen, wobei die voreingestellte Schwelle verwendet wird, um die Empfindlichkeit des Auslösens eines Datensicherungsdienstes anzugeben; und je größer die Schwelle ist, desto niedriger ist die Empfindlichkeit des Auslösens eines Datensicherungsdienstes, und je kleiner die Schwelle ist, desto höher ist die Empfindlichkeit des Auslösens eines Datensicherungsdienstes.

## Revendications

1. Procédé permettant de sauvegarder automatiquement des données, comprenant les étapes suivantes :
détecter si un terminal risque de tomber (101) ; et
s'il est détecté que le terminal risque de tomber, déclencher une opération de sauvegarde de données et sauvegarder les données qui doivent être sauvegardées dans le terminal (102) ;
lorsqu'une position et une posture du terminal changent en raison d'une force extérieure exercée sur le terminal, avant l'étape consistant à détecter si le terminal risque de tomber, le procédé comprenant en outre :
contrôler une posture courante du terminal en utilisant un gyroscope (402) ; et
contrôler, en temps réel par l'intermédiaire du capteur d'accélération, la force agissante exercée sur le terminal (401), et en conjonction avec la posture courante du terminal, déterminer une force agissante exercée sur le terminal dans une direction horizontale et une force agissante exercée sur le terminal dans une direction gravitationnelle (403) ;
l'étape consistant à détecter si un terminal risque de tomber comprenant :
lorsque la force agissante exercée sur le terminal dans la direction gravitationnelle atteint un seuil prédéfini, déterminer que le terminal est dans un état de chute (406) ; et
l'étape consistant à déclencher une opération de sauvegarde de données comprenant :
lorsque la force agissante exercée sur le terminal dans la direction horizontale n'est pas 0, déclencher une opération de sauvegarde de données et envoyer des informations d'authentification à un serveur de canal de sauvegarde, afin que le serveur de canal de sauvegarde exécute une authentification sur le terminal et établisse un canal de transmission de données pour le terminal après que l'authentification a réussi (404, 405) ; et
l'étape consistant à sauvegarder les données qui doivent être sauvegardées dans le terminal comprenant :
lorsqu'il est déterminé que le terminal est dans un état de chute, télécharger, par l'intermédiaire du canal de transmission de données établi à l'avance, les données qui doivent être téléchargées vers un serveur de service de sauvegarde, afin de finir la sauvegarde de données (407).

2. Procédé selon la revendication 1, comprenant en outre l'étape suivante :
prédéfinir un seuil prédéfini, le seuil prédéfini étant utilisé pour indiquer une possibilité de déclenchement d'un service de sauvegarde de données ; et plus le seuil est grand, plus la possibilité de déclenchement d'un service de sauvegarde de données est faible, et plus le seuil est petit, plus la possibilité de déclenchement d'un service de sauvegarde de données est élevée.

3. Appareil permettant de sauvegarder automatiquement des données, comprenant :
une unité de détection (51), configurée pour détecter si un terminal risque de tomber ;
une unité de sauvegarde (52), configurée pour : lorsque l'unité de détection détecte que le terminal risque de tomber, déclencher une opération de sauvegarde de données et sauvegarder les données qui doivent être sauvegardées dans le terminal ; et
un gyroscope (53), configuré pour contrôler une posture courante du terminal ;
l'unité de détection (51) comprenant :
un module de contrôle (513), configuré pour contrôler, en temps réel par l'intermédiaire d'un capteur d'accélération, une force agissante exercée sur le terminal, et en conjonction avec la posture courante du terminal, déterminer, selon le capteur d'accélération, une force agissante exercée sur le terminal dans une direction horizontale et une force agissante exercée sur le terminal dans une direction gravitationnelle ; et
un module de détermination (514), configuré pour : lorsque la force agissante exercée sur le terminal dans la direction gravitationnelle atteint un seuil prédéfini, déterminer que le terminal est dans un état de chute ; et
l'unité de sauvegarde (52) comprenant :
un module d'avertissement précoce (523), configuré pour : lorsque la force agissante exercée sur le terminal dans la direction horizontale n'est pas 0, déclencher une opération de sauvegarde de données et envoyer des informations d'authentification à un serveur de canal de sauvegarde, afin que le serveur de canal de sauvegarde exécute une authentification sur le terminal et établisse un canal de transmission de données pour le terminal après que l'authentification a réussi ; et
l'unité de sauvegarde (52) étant configurée pour : lorsqu'il est déterminé que le terminal est dans un état de chute, télécharger, par l'intermédiaire du canal de transmission de données établi à l'avance, les données qui doivent être téléchargées vers un serveur de service de sauvegarde, afin de finir la sauvegarde de données.

4. Appareil selon la revendication 3, comprenant en outre :
une unité de fixation de seuil (54), configurée pour prédéfinir un seuil prédéfini, le seuil prédéfini étant utilisé pour indiquer une possibilité de déclenchement d'un service de sauvegarde de données ; et plus le seuil est grand, plus la possibilité de déclenchement d'un service de sauvegarde de données est faible, et plus le seuil est petit, plus la possibilité de déclenchement d'un service de sauvegarde de données est élevée.
